# EUROPEAN PATENT SPECIFICATION

(11) **EP 1 277 201 B1**
(45) Date of publication and mention of the grant of the patent: **10.10.2007**
(21) Application number: 01920678.8
(22) Date of filing: 23.03.2001
(51) Int. Cl.: G10L 15/22, G10L 15/26

(54) **WEB-BASED SPEECH RECOGNITION WITH SCRIPTING AND SEMANTIC OBJECTS**
WEB-GESTÜTZTE SPRACHERKENNUNG DURCH SCRIPTING UND SEMANTISCHE OBJEKTE
RECONNAISSANCE VOCALE PAR LE WEB FAISANT INTERVENIR DES OBJETS DU TYPE SCRIPT ET DES OBJETS SEMANTIQUES

(30) Priority: 24.03.2000 US 191915 P; 24.03.2000 US 192091 P; 24.03.2000 US 192090 P; 24.03.2000 US 192076 P
(43) Date of publication of application: 22.01.2003
(73) Proprietor: Eliza Corporation, Beverly, MA 01915 (US)
(72) Inventor: KROEKER, John, Hamilton, MA 01936 (US); BOULANOV, Oleg, Beverly, MA 01915 (US)
(74) Representative: Feldkamp, Rainer
(86) International application number: PCT/US2001/009300
(87) International publication number: WO 2001/073755

(56) References cited:
- US-A- 5 457 768
- US-A- 5 748 841
- US-A- 6 134 548
- US-A- 6 154 720
- US-B1- 6 173 261
- US-B1- 6 173 279
- US-B1- 6 233 561
- YE-YI WANG ET AL: "A CONNECTIONIST MODEL FOR DIALOG PROCESSING" SPEECH PROCESSING 2, VLSI, UNDERWATER SIGNAL PROCESSING. TORONTO, MAY 14 - 17, 1991, INTERNATIONAL CONFERENCE ON ACOUSTICS, SPEECH & SIGNAL PROCESSING. ICASSP, NEW YORK, IEEE, US, vol. VOL. 2 CONF. 16, 14 May 1991 (1991-05-14), pages 785-788, XP000222246 ISBN: 0-7803-0003-3

## Description

### Field of the Invention

The present invention generally relates to systems and methods for developing and implementing transactional speech applications. More specifically, the present invention relates to systems and methods for developing and implementing transactional speech applications using Web-based technologies.

### Cross References to Related Applications

This application claims the benefit of priority from commonly owned U.S. Provisional Patent Application Serial Number 60/192,091, filed March 24 2000, entitled COMBINED SYNTACTIC AND SEMANTIC SEARCH, PARSING, AND APPLICATION ACCESS; U.S. Provisional Patent Application Serial Number 60/191,915, filed March 24 2000, entitled SPEECH RECOGNITION APPLICATION TECHNOLOGY USING WEB, SCRIPTING AND SEMANTIC OBJECTS; U.S. Provisional Patent Application Serial Number 60/192,090, filed March 24 2000, entitled A NOVEL APPROACH TO SPEECH RECOGNITION; and U.S. Provisional Patent Application Serial Number 60/192,076, filed March 24 2000, entitled REMOTE SERVER OBJECT ARCHITECTURE FOR SPEECH RECOGNITION.

### Background of the Invention

With the proliferation of computer systems, an increasing amount of processing is becoming automated. At the same time, the processing power of such systems continues to evolve. To make use of this increasingly available processing capability, organizations are attempting to migrate functions historically performed by individuals, if at all, to automated systems. For instance, increasingly, computer systems are developed and used to engage humans via speech interaction. Some systems, as an example, are implemented to conduct interviews or surveys of individuals via a telephone, while other systems may interact with individuals without the use of a network. Additionally, as speech over the World Wide Web (the "Web") and the Internet (e.g., voice over IP) becomes more and more commonplace, one can assume that human - computer speech based interaction will be increasingly conducted using that medium.

One typical example of human - computer speech based interaction is survey systems, wherein a computer conducts an automated speech based survey of an individual over a telephone. In such a case, the survey system may have a scripted survey (i.e., series of questions) to be asked of the individual. The survey system may ask a first question, as a prompt, and await (e.g., for 5 seconds) a response by the individual. If the survey system does not receive a response, or receives a response that it can not interpret, the survey system may ask the question again or provide an instructional type of feedback. If the survey system receives a response that it can interpret, the survey system goes on to ask a next question or present a next prompt.

Such human - computer systems usually include an automatic speech recognition (ASR) system that converts incoming acoustic information into useful linguistic units, such as words or phrases. In a transactional ASR, for example one operating over a telephone network, there are a set of allowed words and phrases, which are defined by grammars. The process of sorting through the grammars for a particular word or phrase usage is referred to as syntactic search, wherein the words and their order are determined, typically based on probability. Such syntactic search subsystems typically evaluate a word using a fixed start point and a fixed end point, and process that data to determine the word with a related probability. However, this approach tends to be inefficient since the time frame between start and end points may be adequate for some audio inputs, but inadequate for others, where some data beyond an endpoint may be cutoff and in other cases more time may be spent on a word than is required. Additionally, if not yielding results above a certain threshold probability, such systems may backtrack and continue to process the audio input to improve the phonetic estimates. Otherwise, the system may just put forth a best guess, albeit with low confidence.

In such systems, typically audio inputs, whether speech or background noise, are processed as valid speech, for the most part. That is, such systems do not usually maintain sufficient contextual knowledge about the expected response to eliminate extraneous noises (or "barge in"). As a result, such systems may attempt to interpret such noises as speech, thereby producing a result having embedded errors or rejecting the result altogether.

Development of speech applications that utilize speech recognition (SR) systems, to create such human - computer systems, is generally an expensive, time-consuming effort that requires a multi-disciplinary team. The dominant approach to improving the ease of such application development has been to create Web-based applications using HTML extensions. For example VOXML, VoiceXML, and SpeechML are known types of extensions created specifically for SR systems. However, these approaches have been seriously limited in their ability to represent complex speech interactions, due to strong limitations in their coding power, as well as limitations on their control of, and access to, the underlying SR engines. That is, HTML is not a true programming language, but is rather a markup language. Therefore, it only provides a very limited framework, which is not particularly conducive to creating robust applications. Access to the speech recognition engines by such VoiceXML applications is limited by the bottlenecks of markup languages, such as the lack of programming language facilities, and fixed, predefined interfaces to the SR engine.

Such VoiceXML applications typically reside with a SR system on a voice portal (or gateway) that acts as a client to a Web server that provides back-end services to the VoiceXML application. The back-end services include standard Web services and, usually, custom software required by the VoiceXML application. For example, a back-end (i. e., server-side) product data servlet is typically included that is responsible for talking to back-end services, including converting received replies into XML. A product presentation servlet is typically also included at the server-side. This servlet is used to put content in a format required by the VoiceXML application (or client). A repository of VoiceXML specific XSL templates resides at the backend and defines the formats used by the product presentation servlet. A product service is also provided at the back-end that manages the dissemination of product-related information, for example, to facilitate product browsing. And, a product database used by the various server-side servlets and services also resides at the back-end.

This approach of a strong reliance on back-end, server-side services is required with such VoiceXML applications, since VoiceXML applications are not, themselves, capable of delivering complex and robust functions.

From the US 5 748 841, a system is known for running a program via speech. Speech commands are received by a dialogue system and converted into a semantic expression. The dialogue system keeps track of the dialogue being run by maintaining a dialogue history.

The system receives an input given by the user. This input will be recognized and converted into a semantic expression. The expression will then be tested against a dialogue model to determine if it is a meta-command or a simple command. If the input expression makes sense in the dialogue context, it will be interpreted and eventually application scripts will be run. Application scripts are used to parse and evaluate user inputs. They are not defining a context. An interface is used as an user interface.

### Summary of the Invention

The present invention is a system and method for creating and implementing transactional speech applications (SAs) using Web technologies, without reliance on server-side standard or custom services. A transactional speech application may be any application that requires interpretation of speech in conjunction with a speech recognition (SR) system, such as, for example, consumer survey applications or systems. A speech application in accordance with the present invention is represented within a Web page, as an application script that interprets semantic objects according to a context. Any commonly known scripting language can be used to write the application script, such as Jscript,PerIScript, and VBscript. The present invention is "Web-based"to the extent that it implements Web technologies, but it need not include or access the World Wide Web.

The present application is defined by the appended independent claims.

A SR system includes a SR platform and SR application program. The SR system serves as an interface or gateway between a user accessible network and an application system (i.e., source) that generates the Web page that includes the application script. The application script source may be local or remote or remote to the SR system. If the SR system is to access a remote application system, the SR system includes page address information (e.g., URLs) and may be configured to access the application system and download the Web page in response to an incoming call.

The SR platform may be, for example, a standard server having a network interface that facilitates receipt of audio information. The network interface may facilitate reception of audio information by any of a variety of a networks, such as telephone networks, cellular telephone networks, the Web, Internet, local area networks (LANs), wide area networks (WANs), private networks, virtual private networks (VPNs), intranets, extranets, wireless networks, and the like, or some combination thereof. The SR system may be accessible by any one or more of a variety of devices capable of communicating audio information, such as telephone, cellular telephone, personal computer (PC), personal digital assistant (PDA) or other types of audio enabled devices.

The Web page, including the application script, may reside at the SR system, local to it, or may be downloaded from a transactional speech application system via a network, such as the networks described above. The functionality of the speech application is delivered to the SR system from the application script without the need for server-side application coding at an application server, as is necessary in systems using speech applications written in VoiceXML, for example. That is, all required application functionality may be downloaded, if necessary, and executed at the SR system. Such functionality includes presenting user prompts, processing user responses, overall application session management, interfacing with other available modules or facilities that provide functionality. Such functionality also includes SR system control functionality and standard HTML and operating system functionality. Interfaces to such functionality are preferably written as standalone, reusable objects.

Generally, all of the interface objects used by the application script conform to a standard interface model, such as ActiveX. The application script can easily access all of the inherent ActiveX capabilities of the operating system (e.g., messaging, database access, etc.) via these standard interfaces using standard ActiveX controls. Using ActiveX interface objects (i.e., standard, consistent objects) for accessing and controlling functions available to the application script greatly eases the development and integration of such applications, which need only be configured to use these standard ActiveX interface objects, so do not require special or custom interfaces. The ActiveX objects are local to the SR system and can be used with any application script presented or downloaded.

An semantic interface to the SR application exposes the application script to the SR system. The semantic interface is written as an object that is local to the SR system, such as an ActiveX object. The semantic interface object includes standard HTML browser functionality, including tag processing, hyper references, and so forth. The semantic interface object also supports HTML extensions, such as Dialog, Play, and Record, as well as other known HTML extensions. If there are script tags residing on the Web page, the semantic interface loads a corresponding script engine. Since the semantic interface is coded as a high-level object interface, it need not be customized for the application script. Through the semantic interface object, the application script controls the SR system. For example, the application script can task the SR application to begin recognition, play back a file, play a prompt, and so on. Such tasking may be accomplished using standard object oriented design (OOD) calls and methods.

The SR application functionality is configured to produce and return a context free set of semantic data representing all possible valid interpretations of a received audio input. That is, the SR system may be configured to perform syntactic and semantic processing using a common, root grammar or set of grammars to produce a semantic data representing a plurality of valid interpretations of a received audio input. The semantic data is represented in a semantic object (or objects) passed from the SR application to the application script. Each semantic object passes through the semantic interface to an evaluation interface of the application script. The evaluation interface can also be written as an ActiveX object, which may serve as an evaluation (or interpretation) tool to the application script. The application script provides a context to the evaluation interface. The evaluation interface determines the a category as a function of the context and applies the category to the set of semantic data to obtain a specific interpretation of the set of semantic data, from all of the possible interpretations. This specific result may be referred to as a linguistic result, representing a word, phrase, or values. Once the linguistic result is determined, the application script processes the result to determine its next action or prompt for the user.

### Brief Description of the Drawings

The foregoing and other objects of this invention, the various features thereof, as well as the invention itself, may be more fully understood from the following description, when read together with the accompanying drawings, described:
FIG. 1 is a network architecture within which the present invention may be implemented;
FIG. 2 is a block diagram depicting the various elements of an implementation of a speech application and speech recognition system in accordance with the present invention; and
FIG. 3 is a flow chart depicting a method of the present invention.

For the most part, and as will be apparent when referring to the figures, when an item is used unchanged in more than one figure, it is identified by the same alphanumeric reference indicator in all figures.

### Detailed Description of the Preferred Embodiment

The present invention is a system and method for creating and implementing transactional speech applications (SAs) using Web technologies, without reliance on server-side standard or custom services. A transactional speech application may be any application that requires interpretation of speech in conjunction with a speech recognition (SR) system, such as, for example, consumer survey applications or systems. A speech application in accordance with the present invention is represented within a Web page, as an application script that interprets semantic objects according to a context. Any commonly known scripting language can be used to write the application script, such as Jscript, PerlScript, and VBscript. The present invention is "Web-based" to the extent that it implements Web technologies, but it need not include or access the World Wide Web.

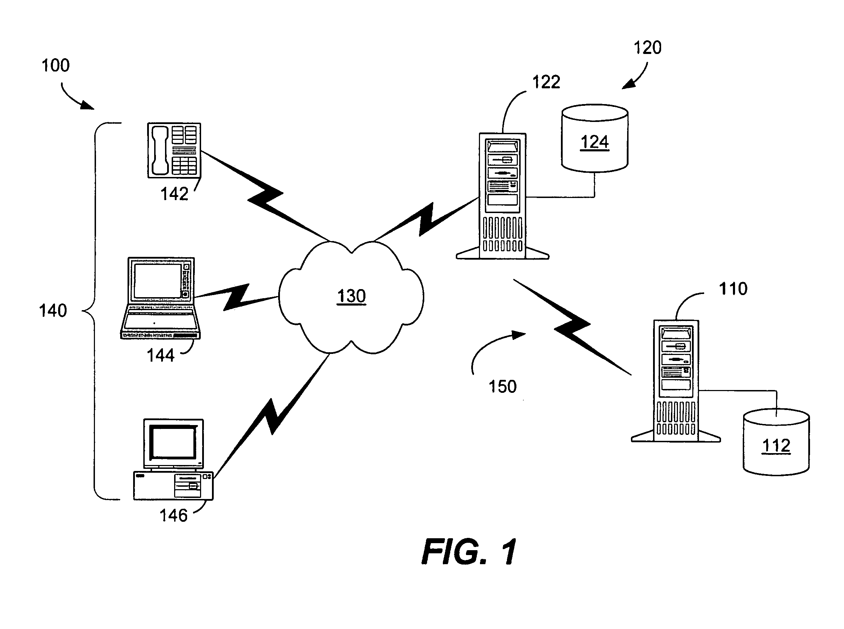

The present invention may be implemented on any one or more of a variety of devices, networks, and architectures. FIG. 1A shows one possible architecture 100 on which the present invention may be implemented. A SR system 120 includes a SR application program hosted on a standard platform, such as SR server 122. One or more associated databases 124 includes the SR application and data, such as context free grammar databases. The SR system serves as an interface or gateway between a user accessible network 130 and an application system (i.e., source) that generates the Web page that includes the application script. The application source may be local or remote to the SR system. In fact, the application script source may also be hosted on server 122. In other embodiments, application code may be hosted on an application server 110, having an associated DB 112, that is coupled to the SR system via any one of a variety of standard networks 150. In yet other embodiments, the SR system may service a variety of application sources, some of which may be local and others may be remote to the SR system. If the SR system is to access a remote application system, the SR system includes page address information (e.g., URLs) and may be configured to access the application system and download the Web page in response to an incoming call.

The SR system 120 may include a network interface that facilitates receipt of audio information by any of a variety of a networks, such as telephone networks, cellular telephone networks, the Web, Internet, local area networks (LANs), wide area networks (WANs), private networks, virtual private networks (VPNs), intranets, extranets, wireless networks, and the like, or some combination thereof. The SR system may be accessible by any one or more of a variety of devices 140 capable of communicating audio information. Such devices 140 may include, but are not limited to, a standard telephone (including cellular telephones) 142, a laptop computer 144, or a desktop computer 146, as well as other audio enabled devices (e.g., personal digital assistants, audio receivers, and application servers).

A speech application may be any interactive application that collects, provides, and/or shares information. As examples, in the present invention, a speech application and application script may be any of a group of interactive applications, including consumer survey applications; Web access applications; educational applications, including health education applications and computer-based lesson applications and testing applications; screening applications, including patient screening applications and consumer screening applications; health risk assessment applications; monitoring applications, including heath data monitoring applications and consumer preference monitoring applications; compliance applications, including applications that generate notifications of compliance related activities, including notifications regarding health or product maintenance; test results applications, including applications that provide at least one of lab test results, standardized tests results, consumer product test results, and maintenance results; and linking applications, including applications that link two or more of the above applications.

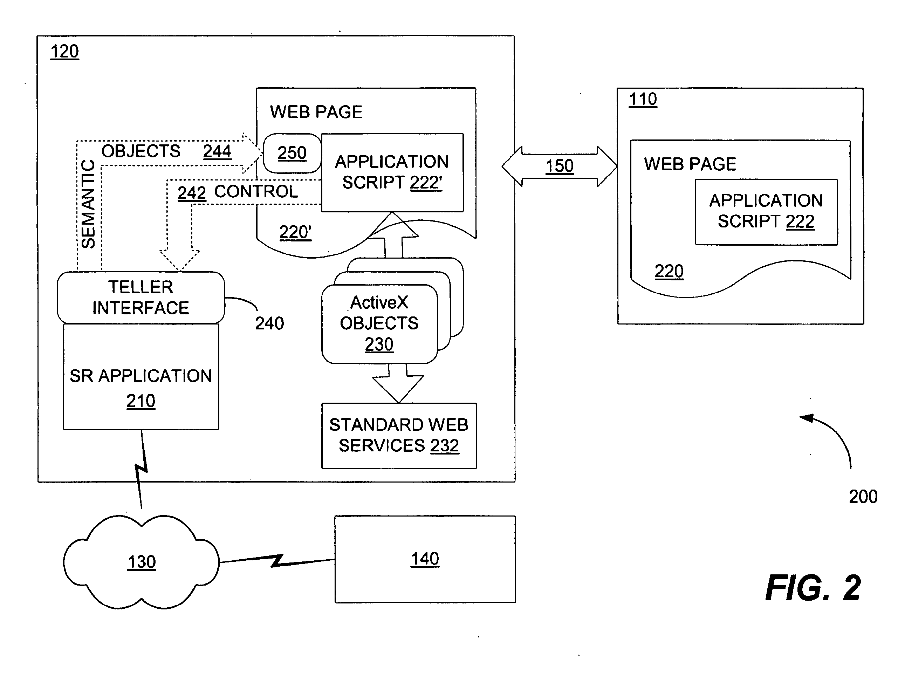

Referring to FIG. 2, a block diagram 200 showing an implementation of the present invention is shown. The Web page 220, including the application script 222, may reside local to the SR system or may be downloaded from a transactional speech application system 110 via network 150. In any event, Web page 220 is loaded on SR system 120 (or a platform local to it), represented as Web page 220' with application script 222'. The functionality of the speech application is delivered to the SR system 120 from the application script 222' without the need for server-side application coding at an application server 110, as is necessary in systems using speech applications written in VoiceXML, for example. That is, all required application functionality is downloaded as part of the application script and executed with the SR system 120. Such functionality includes presenting user prompts, processing user responses, overall application session management, and interfacing with other available modules or facilities that provide functionality. Such prompts may include questions, like "Have you ever been to Aruba?" User responses include, for example, answers to such questions, e.g., "Hundred times!" Overall session management may include administering a survey that presents such prompts and processes such responses. Such functionality also includes functionality to control SR system 120 and standard HTML and operating system functionality. Interfaces to such functionality are preferably written as standalone, reusable objects.

In the preferred embodiment, all of the interface objects used by application script 222' conform to a standard interface model, such as ActiveX. That is, ActiveX objects 230 provide the application script 222' access to standard Web services. Therefore, application script 222' can easily access all of the inherent ActiveX capabilities of the operating system (e.g., messaging, database access, etc.) via these standard interfaces 230 using standard ActiveX controls. Using ActiveX interface objects 23 (i.e., standard, consistent objects) for accessing and controlling functions available to the application script 222' greatly eases the development and integration of such applications. Speech application in accordance with the present invention need only be configured to use these standard ActiveX interface objects 230, so do not require special or custom interfaces. The ActiveX objects 230 are local to the SR system and can be used with any application script presented to or loaded thereon.

A semantic interface, referred to as the "Teller" interface 240, exposes the application script 222' to the SR application 210. The Teller interface is written as an ActiveX object that is local to the SR system 210. The Teller interface object 210 includes standard HTML browser functionality, including tag processing, hyper references, and so forth. The Teller interface object 240 also supports HTML extensions, such as Dialog, Play, and Record, as well as other known HTML extensions. If there are script tags residing on the Web page, the Teller interface object 240 loads a corresponding script engine.

Since the Teller interface is coded as a high-level object interface, it need not be customized for the application script 222'. Rather, many instances of the Teller interface object 240 can be created, each serving one of a variety of application scripts. An instance of the Teller interface object 240 can be created in advance or upon an incoming call from device 140. Through the Teller interface object 240, application script 222' controls the SR application 210, represented as arrow 242. For example, the application script can task the SR application to begin recognition, play back a file, play a prompt, and so on. Such tasking may be accomplished using standard object oriented design (OOD) calls and methods.

Teller interface object 240 can be further appreciated with respect to the following pseudo code segment:
// Transaction Parameters
   void SetTimeout(int time);
   void SetBargeIn(boolean b);
   void SetListenRatio(float confidence);
// Transaction Methods
   ResultInterface Play(String file);
   ResultInterface Say(String sentence);
   ResultInterface Listen(String semanticObjectClass);
   boolean Hangup();

The SR application 210 functionality is configured to produce and return a context free set of semantic data representing all possible valid interpretations of a received audio input. That is, the SR system 120 may be configured to perform syntactic and semantic processing using a common, root grammar or set of grammars to produce a semantic tree instance representing all possible valid interpretations of a received audio stream. The semantic data is represented in a semantic object (or objects) 244 passed from the SR application 210 to the application script 222'. Each semantic object 244 passes through the Teller interface 240 to an evaluation interface 250 of the application script.

The evaluation interface 250 can also be written as an ActiveX object, which may serve as an evaluation (or interpretation) tool to the application script 222'. The application script 222' provides a context to the evaluation interface 250. The evaluation interface 250 determines a category associated with the context and applies the category to the semantic objects 244 to obtain a specific interpretation of the set of semantic data, from all of the possible interpretations. This specific result may be referred to as a linguistic result, representing a word, phrase, or values. Once the linguistic result is determined, the application script 222' processes the result to determine its next action or prompt for the user. The evaluation interface 250 may be further appreciated with the following pseudo code segment.

```
        ResultInterface {
                String asCategory(String category);
        }
```

Categories are identified by their names. They specify the particular semantic interpretation required. Note that a semantic object 244 may capable of interpretation using any one of multiple valid categories. These categories control different semantic interpretations of the semantic object, depending on context. Collectively, the categories describe all possible valid interpretations of the semantic object. Because all contexts are represented, this allows the semantic object to be used and re-used in a context-independent manner. Examples of Categories are: "number", "string", "digits", "car-model".

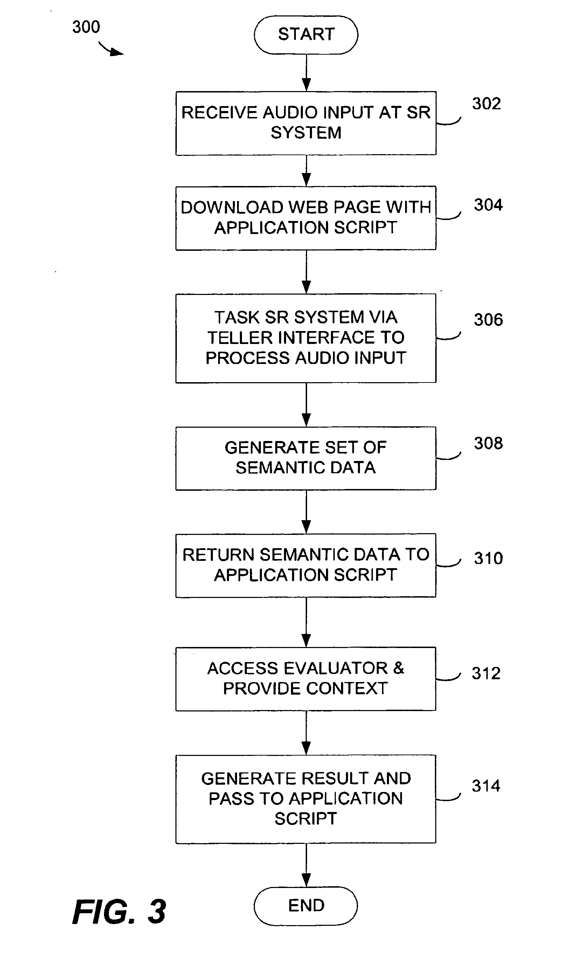

FIG. 3 provides a flowchart that may be implemented by the applications and objects for FIG. 2 by a transactional speech application in accordance with the present invention. The process begins, for example, with receipt of an audio input by device 140 via network 130. This audio input is received by the SR system in step 302. If the application script 222' has not already been downloaded to SR system 120, the application script 222' is downloaded from a source in step 304. With receipt of an audio input, the application script 222' tasks the SR system via controls 242 to, for example, interpret the audio input, in step 306.

By interpreting the audio input, the SR application 210 generates a context free semantic tree instance representing all possible valid interpretations of the audio input, which is represented as one or more semantic objects 244, in step 308. In step 310, the SR application 210 passes the semantic object(s) 244 to the application object 222' via the Teller interface 240. The Teller interface does not perform any substantive processing of the semantic object(s) 244. Rather, a semantic tree evaluator 250 receives the semantic tree instance and a context dictated by the application script, in step 312. Evaluator 250 may be provided with the context by the application script 222' prior to receipt of the semantic tree instance, embodied in semantic object 244. The semantic tree instance may be directly received from the SR application 210 or it may be passed through the application script 222', depending on the embodiment.

In the preferred form, the semantic tree evaluator 250, in step 314, determines a category to be applied at each node of the semantic tree instance. Since the semantic tree instance is received from the SR application 210 as context free and representing all valid interpretations of the audio input, application of the context and a corresponding category at each node is necessary to achieve a single, correct linguistic result. This result serves as a response to a pending prompt by the application script 222'. Accordingly, also in step 314, the linguistic result is passed to application script 222'. Application script 222' determines its next action, e.g., send another prompt, as a function of the linguistic result.

As the session is conducted, the application script 222' need not access back-end servers for any reason. When the session is finished, for example, if a survey being administered by application script 222' is complete, the application script 222' may be deleted. The ActiveX objects remain resident at the SR system and may be reused by other application scripts downloaded to the SR system.

The invention may be embodied in other specific forms without departing from the scope embraced by the appended claims.

## Claims

1. A speech application system, comprising:
A. a speech recognition (SR) system configured to receive an audio input and generate a context free set of semantic data representing all possible valid interpretations of said audio input;
B. a speech application script, loaded at the SR system and configured to task said SR system, said application script defining a context;
C. a semantic data evaluator, configured to receive said context free set of semantic data and said context defined by said application script and, as a function thereof, to generate a linguistic result corresponding to said audio input and constituting a specific interpretation of said set of valid interpretations, and to return said linguistic result to said application script;
D. a set of reusable object oriented interfaces local to the SR system, said interfaces configured to interface said application script with said SR system.

2. A system as in claim 1, wherein one or more of said application script is included in a Web page.

3. A system as in claim 1, wherein one or more of said interfaces are objects exposed via ActiveX facilities.

4. A system as in claim 1, wherein said application script includes programming code written in a language chosen from a group of scripting languages comprising
(1) Jscript;
(2) PerlScript ; and
(3) VBscript.

5. A system as in claim 1, wherein said set of semantic data is represented as a semantic tree instance.

6. A system as in claim 1, wherein said set of semantic data is represented in a semantic object.

7. A system as in claim 1, wherein said audio input is received from a device chosen from a group comprising :
A. a telephone;
B. a cellular telephone;
C. a personal computer;
D. an application server; and
E. an audio receiver.

8. A system as in claim 1, wherein said audio input is received via a network comprised of one or more wire or wireless networks from a group comprising:
A. a telephone network;
B. a cellular telephone network;
C. a LAN;
D. a WAN;
E. a virtual private network;
F. the Internet; and
G. the Web.

9. A system as in claim 1, wherein said plurality of valid interpretations of said audio input includes all valid interpretations of said audio input within said context.

10. A system as in claim 1, **characterized by** that speech application is chosen from a group of interactive speech applications comprising:
A. consumer survey applications;
B. Web access applications;
C. educational applications, including health education applications and computer based lesson applications and testing applications;
D. screening applications, including patient screening applications and consumer screening applications;
E. health risk assessment applications;
F. monitoring applications, including heath data monitoring applications and consumer preference monitoring applications;
G. compliance applications, including applications that generate notifications of compliance related activities, including notifications regarding health or product maintenance;
H. test results applications, including applications that provide at least one of lab test results, standardized tests results, consumer product test results, and maintenance results; and
I. linking applications, including applications that link two or more of the applications in parts A through H.

11. A system as in any of the claims 1 to 10, wherein:
A. the speech recognition (SR) system is hosted on a first computer and configured to receive the audio input from an input device and to generate one or more semantic objects representing a plurality of valid interpretations of said audio input;
B. the Web page is loaded on said first computer from a second computer, said Web page including an application script comprising a set of speech application functionality and configured to interact with said input device via said SR system, wherein said speech application is configured to conduct speech application sessions without accessing said second computer;
C. the set of reusable object oriented interfaces is local to the first computer, said interfaces including:
(1) one or more interface objects configured to facilitate access by said application script to standard services of said first computer; and
(2) a semantic interface configured to facilitate access to and control of said SR system by said application script; and
D. the semantic object evaluator is configured to generate from said semantic objects, as a function of said context, a single interpretation of said audio input and to return said single interpretation to said application script.

12. A system as in claim 11, wherein speech application is chosen from a group of interactive speech applications comprising:
A. consumer survey applications;
B. Web access applications;
C. educational applications, including health education applications and computer based lesson applications and testing applications;
D. screening applications, including patient screening applications and consumer screening applications;
E. health risk assessment applications;
F. monitoring applications, including heath data monitoring applications and consumer preference monitoring applications;
G. compliance applications, including applications that generate notifications of compliance related activities, including notifications regarding health or product maintenance;
H. test results applications, including applications that provide at least one of lab test results, standardized tests results, consumer product test results, and maintenance results; and
I. linking applications, including applications that link two or more of the applications in parts A through H:

13. A system as in claim 11, wherein said set of reusable objet oriented interfaces and said semantic object evaluator are objects exposed via ActiveX facilities.

14. A speech application script for a Web page, the script being configured to interact with a speech recognition (SR) system that is hosted on a first computer and configured to receive an audio input and to generate one or more semantic objects representing a plurality of valid interpretations of said audio input, said first computer also including a plurality of interface objects and a semantic object evaluator configured to generate from said one or more semantic objects a single interpretation of said audio input as a function of a context, said speech application script comprising:
A. a context definition ;
B. a link to said semantic object evaluator;
C. a link to said SR system, via a semantic interface object, from said plurality of interface objects;
D. a set of control functionality comprising:
(1) a session manager configured to generate user prompts and to determine a next action as a function of said single interpretation;
(2) a SR system controller, configured to task said SR system;
(3) a communication manager, configured to manage interaction with said input device via said SR system,
wherein said speech application script is loadable on said first computer from a second computer and said speech application is configured to conduct speech application sessions without accessing said second computer.

15. A system as in claim 14 wherein said interface objects are objects exposed via ActiveX facilities.

16. An application script as in claim 14 wherein said speech application script is a speech application chosen from a group of interactive speech applications comprising:
A. consumer survey applications;
B. Web access applications;
C. educational applications, including health education applications and computer based lesson applications and testing applications;
D. screening applications, including patient screening applications and consumer screening applications;
E. health risk assessment applications;
F. monitoring applications, including heath data monitoring applications and consumer preference monitoring applications;
G. compliance applications, including applications that generate notifications of compliance related activities, including notifications regarding health or product maintenance;
H. test results applications, including applications that provide at least one of lab test results, standardized tests results, consumer product test results, and maintenance results; and
I. linking applications, including applications that link two or more of the applications in parts A through H.

17. A method for configuring a speech application system comprising a speech recognition (SR) system that is hosted on a first computer and includes means to receive an audio input, said method comprising:
A. generating a Web page on a second computer;
B. defining a speech application script according to claim 14;
C. integrating said application script into said Web page;
D. loading said Web page, including said application script, from said second computer to said first computer; and
E. establishing a set of standard interfaces between said application script and said SR system.

18. A method of operating a speech application system comprising a method according to claim 17 and further comprising :
A. receiving said audio input by said SR system;
B. loading the Web page including the application script on said first computer;
C. establishing a set of standard interfaces between said SR system and said application script, including establishing a semantic evaluator;
D. in response to tasking by said application script, generating by said SR system one or more semantic objects representing all possible interpretations of said audio input;
E. in response to receiving a context defined by said application script, determining by said semantic evaluator a single semantic interpretation from said one or more semantic objects; and
F. determining a next action by said application script as a function of said single semantic interpretation.

## Patentansprüche

1. Sprachanwendungs-System, mit:
A. einem Spracherkennungs- (SR-) System, das zum Empfang eines Audio-Eingangssignals und zur Erzeugung eines Kontext-freien Satzes von semantischen Daten konfiguriert ist, die alle möglichen gültigen Interpretationen des Audio-Eingangs darstellen;
B. ein Sprachanwendungs-Skript, das an dem SR-System geladen und zum Bewirken eines Arbeitsschrittes des SR-Systems konfiguriert ist, wobei das Anwendungs-Skript einen Kontext definiert;
C. eine semantische Daten-Auswerteeinrichtung, die zum Empfang des Kontext-freien Satzes von semantischen Daten und des durch das Anwendungs-Skript definierten Kontextes und zur Erzeugung, als Funktion hiervon, eines linguistischen Ergebnisses konfiguriert ist, das dem Audio-Eingang entspricht und eine spezifische Interpretation des Satzes von gültigen Interpretationen darstellt, und um das linguistische Ergebnis an das Anwendungs-Skript zurückzuliefern;
D. einen Satz von wiederverwendbaren objektorientierten Schnittstellen, die für das SR-System lokal sind, wobei die Schnittstellen zur Schnittstellenverbindung des Anwendungs-Skriptes mit dem SR-System konfiguriert sind.

2. System nach Anspruch 1, bei dem ein oder mehrere Anwendungs-Skripte in einer Web-Seite enthalten sind.

3. System nach Anspruch 1, bei dem ein oder mehrere der Schnittstellen Objekte sind, die über ActiveX-Einrichtungen ausgebildet werden.

4. System nach Anspruch 1, bei dem das Anwendungs-Skript Programmier-Code einschließt, der in einer Sprache geschrieben ist, die aus einer Gruppe von Skript-Sprachen ausgewählt sind, die Folgendes umfasst:
(1) JSkript;
(2) PerlSkript; und
(3) VBscript.

5. System nach Anspruch 1, bei dem der Satz von semantischen Daten als eine semantische Baum-Instanz dargestellt ist.

6. System nach Anspruch 1, bei dem der Satz von semantischen Daten in einem semantischen Objekt dargestellt ist.

7. System nach Anspruch 1, bei dem der Audio-Eingang von einem Gerät empfangen wird, das aus der Gruppe ausgewählt ist, die Folgendes umfasst:
A. ein Telefon;
B. ein Zellulartelefon;
C. einen persönlicher Computer;
D. einen Anwendungs-Server; und
E. einen Audio-Empfänger.

8. System nach Anspruch 1, bei dem der Audio-Eingang über ein Netzwerk empfangen wird, das ein oder mehrere drahtgebundene oder drahtlose Netzwerke aus einer Gruppe umfasst, die Folgendes umfasst:
A. ein Telefon-Netzwerk;
B. ein Zellulartelefon-Netzwerk;
C. ein LAN;
D. ein WAN;
E. ein virtuelles privates Netzwerk;
F. das Internet; und
G. das weltweite Datennetz (Web).

9. System nach Anspruch 1, bei dem die Vielzahl von gültigen Interpretationen des Audio-Einganges alle gültigen Interpretationen des Audio-Einganges innerhalb des Kontextes einschließt.

10. System nach Anspruch 1, **dadurch gekennzeichnet, dass** die Sprachanwendung aus einer Gruppe von interaktiven Sprachanwendungen ausgewählt ist, die Folgendes umfasst:
A. Verbraucher-Umfrageanwendungen;
B. Zugangsanwendungen des weltweiten Datennetzes;
C. Unterrichtsanwendungen unter Einschluss von Gesundheits-Unterrichtsanwendungen und Computer-basierten Unterrichtsanwendungen und Testanwendungen;
D. Übersichtsanwendungen unter Einschluss von Patienten-Übersichtsanwendungen und Verbraucher-Übersichtsanwendungen;
E. Gesundheitsgefahr-Abschätzungsanwendungen;
F. Überwachungsanwendungen, unter Einschluss von Gesundheitsdaten-Überwachungsanwendungen und Verbraucher-Vorlieben-Überwachungsanwendungen;
G. Einhaltungsanwendungen unter Einschluss von Anwendungen, die Benachrichtigungen über Einhaltungs-bezogene Aktivitäten erzeugen, unter Einschluss von Benachrichtigungen hinsichtlich der Gesundheit und der Produkt-Wartung;
H. Testergebnisanwendungen, unter Einschluss von Anwendungen, die zumindest eines von Labor-Testergebnissen, genormten Testergebnissen, Verbraucher-Produkt-Testergebnissen und Wartungsergebnissen einschließen; und
I. Verknüpfungsanwendungen, die Anwendungen einschließen, die zwei oder mehr der Anwendungen in den Teilen A bis H miteinander verknüpfen.

11. System nach einem der Ansprüche 1 bis 10, bei dem:
A. das Spracherkennungs- (SR-) System auf einem ersten Computer untergebracht ist und so konfiguriert ist, dass es den Audio-Eingang von einer Eingabe-Vorrichtung empfängt und ein oder mehrere semantische Objekte erzeugt, die eine Vielzahl von gültigen Interpretationen des Audio-Einganges darstellen;
B. die Web-Seite auf den ersten Computer von einem zweiten Computer geladen wird, wobei die Web-Seite ein Anwendungs-Skript einschließt, das einen Satz von Sprachanwendungs-Funktionalität umfasst und zum Wechselwirken mit der Eingabe-Vorrichtung über das SR-System konfiguriert ist, wobei die Sprachanwendung so konfiguriert ist, dass sie Sprachanwendungs-Sitzungen ohne Zugriff auf den zweiten Computer ausführt;
C. der Satz von wiederverwendbaren objektorientierten Schnittstellen lokal an dem ersten Computer angeordnet ist, wobei die Schnittstellen Folgendes einschließen:
(1) ein oder mehrere Schnittstellen-Objekte, die zur Erleichterung des Zuganges des Anwendungs-Skriptes auf Standard-Dienste des ersten Computers konfiguriert sind; und
(2) eine semantische Schnittstelle, die zur Erleichterung des Zuganges an und zur Steuerung des SR-Systems durch das Anwendungs-Skript konfiguriert ist; und
D. die semantische Objekt-Auswertungseinrichtung so konfiguriert ist, dass sie aus den semantischen Objekten als eine Funktion des Kontextes eine einzige Interpretation des Audio-Einganges erzeugt und diese einzelne Interpretation an das Anwendungs-Skript zurückzuliefert.

12. System nach Anspruch 1, bei dem die Sprachanwendung aus einer Gruppe von interaktiven Sprachanwendungen ausgewählt ist, die Folgendes umfasst:
A. Verbraucherumfrageanwendungen;
B. Web-Zugangsanwendungen;
C. Unterrichtsanwendungen unter Einschluss von Gesundheits-Unterrichtsanwendungen und Computer-basierten Unterrichtsanwendungen und Testanwendungen;
D. Übersichtsanwendungen unter Einschluss von Patienten-Übersichtsanwendungen und Verbraucher-Übersichtsanwendungen;
E. Gesundheitsgefahr-Abschätzungsanwendungen;
F. Überwachungsanwendungen, unter Einschluss von Gesundheitsdaten-Überwachungsanwendungen und Verbraucher-Vorlieben-Überwachungsanwendungen;
G. Einhaltungsanwendungen unter Einschluss von Anwendungen, die Benachrichtigungen über Einhaltungs-bezogene Aktivitäten erzeugen, unter Einschluss von Benachrichtigungen hinsichtlich der Gesundheit und der Produkt-Wartung;
H. Testergebnisanwendungen, unter Einschluss von Anwendungen, die zumindest eines von Labor-Testergebnissen, genormten Testergebnissen, Verbraucher-Produkt-Testergebnissen und Wartungsergebnissen einschließen; und
I. Verknüpfungsanwendungen, die Anwendungen einschließen, die zwei oder mehr der Anwendungen in den Teilen A bis H miteinander verknüpfen.

13. System nach Anspruch 11, bei dem der Satz von wiederverwendbaren Objekt orientierten Schnittstellen und die semantische Objekt-Auswertungseinrichtung Objekte sind, die über ActiveX-Einrichtungen beaufschlagt sind.

14. Sprachanwendungs-Skript für eine Web-Seite, wobei das Skript so konfiguriert ist, dass es mit einem Spracherkennungs- (SR-) System zusammenwirkt, das auf einem ersten Computer abläuft und zum Empfang eines Audio-Eingangs und zur Erzeugung eines oder mehrerer semantischer Objekte konfiguriert ist, die eine Vielzahl von gültigen Interpretationen des Audio-Einganges darstellen, wobei der erste Computer weiterhin eine Vielzahl von Schnittstellen-Objekten und eine semantische Objekt-Auswertungseinrichtung einschließt, die zur Erzeugung aus dem einen oder mehreren semantischen Objekten einer einzigen Interpretation des Audio-Einganges als eine Funktion des Kontextes konfiguriert ist, wobei das Anwendungs-Skript Folgendes umfasst:
A. eine Kontext-Definition;
B. eine Verknüpfung zu der semantischen Objekt-Auswertungseinrichtung;
C. eine Verknüpfung zu dem SR-System über ein semantisches Schnittstellen-Objekt von der Vielzahl von Schnittstellen-Objekten;
D. einen Satz von Steuer-Funktionalität, der Folgendes umfasst:
(1) eine Sitzungs-Verwaltung, die zur Erzeugung von Benutzer-Aufforderungen und zur Bestimmung einer nächsten Aktion als eine Funktion der einzigen Interpretation konfiguriert ist;
(2) eine SR-System-Steuerung, die zur Lieferung von Aufgabenstellungen an das SR-System konfiguriert ist;
(3) eine Kommunikations-Verwaltung, die zur Verwaltung der Wechselwirkung mit der Eingabe-Vorrichtung über das SR-System konfiguriert ist, wobei das Sprachanwendungs-Skript auf den ersten Computer von einem zweiten Computer aus ladbar ist und die Sprachanwendung so konfiguriert ist, dass sie Sprachanwendungs-Sitzungen ohne Zugriff auf den zweiten Computer ausführt.

15. System nach Anspruch 14, bei dem die Schnittstellen-Objekte Objekte sind, die über ActiveX-Einrichtungen ausgebildet sind.

16. Anwendungs-Skript nach Anspruch 14, bei dem das Sprachanwendungs-Skript eine Sprachanwendung ist, die aus einer Gruppe von interaktiven Sprachanwendungen ausgewählt ist, die Folgendes umfasst:
A. Verbraucherumfrageanwendungen;
B. Web-Zugangsanwendungen;
C. Unterrichtsanwendungen unter Einschluss von Gesundheits-Unterrichtsanwendungen und Computer-basierten Unterrichtsanwendungen und Testanwendungen;
D. Übersichtsanwendungen unter Einschluss von Patienten-Übersichtsanwendungen und Verbraucher-Übersichtsanwendungen;
E. Gesundheitsgefahr-Abschätzungsanwendungen;
F. Überwachungsanwendungen, unter Einschluss von Gesundheitsdaten-Überwachungsanwendungen und Verbraucher-Vorlieben-Überwachungsanwendungen;
G. Einhaltungsanwendungen unter Einschluss von Anwendungen, die Benachrichtigungen über Einhaltungs-bezogene Aktivitäten erzeugen, unter Einschluss von Benachrichtigungen hinsichtlich der Gesundheit und der Produkt-Wartung;
H. Testergebnisanwendungen, unter Einschluss von Anwendungen, die zumindest eines von Labor-Testergebnissen, genormten Testergebnissen, Verbraucher-Produkt-Testergebnissen und Wartungsergebnissen einschließen; und
I. Verknüpfungsanwendungen, die Anwendungen einschließen, die zwei oder mehr der Anwendungen in den Teilen A bis H miteinander verknüpfen.

17. Verfahren zur Konfiguration eines Sprachanwendungs-Systems, mit einem Spracherkennungs- (SR-) System, das auf einem ersten Computer abläuft und Einrichtungen zum Empfang eines Audio-Eingangs einschließt, wobei das Verfahren Folgendes umfasst:
A. Erzeugen einer Web-Seite auf einem zweiten Computer;
B. Definieren eines Sprachanwendungs-Skriptes gemäß Anspruch 14;
C. Integration des Anwendungs-Skriptes in die Web-Seite;
D. Laden der Web-Seite, unter Einschluss des Anwendungs-Skriptes, von dem zweiten Computer auf den ersten Computer; und
E. Ausbilden eines Satzes von Standard-Schnittstellen zwischen dem Anwendungs-Skript und dem SR-System.

18. Verfahren zum Betrieb eines Sprachanwendungs-Systems, das ein Verfahren nach Anspruch 17 umfasst, das weiterhin Folgendes umfasst:
A. Empfangen des Audio-Einganges durch das SR-System;
B. Laden der Web-Seite, die das Anwendungs-Skript einschließt, auf den ersten Computer;
C. Ausbilden eines Satzes von Standard-Schnittstellen zwischen dem SR-System und dem Anwendungs-Skript, unter Einschluss der Ausbildung einer semantischen Auswerteeinrichtung;
D. als Antwort auf die Aufgaben-Beauftragung durch das Anwendungs-Skript, Erzeugen eines oder mehrerer semantischer Objekte durch das SR-System, die alle möglichen Interpretationen des Audio-Einganges darstellen;
E. als Antwort auf den Empfang eines Kontextes, der von dem Anwendungs-Skript definiert ist, Bestimmen einer einzigen semantischen Interpretation durch die semantische Auswerteeinrichtung aus dem einen oder mehreren semantischen Objekten; und
F. Bestimmen einer nächsten Aktion durch das Anwendungs-Skript als eine Funktion der einzigen semantischen Interpretation.

## Revendications

1. Système d'application vocale, comprenant :
A. un système de reconnaissance vocale (RV) configuré pour recevoir une entrée audio et produire un ensemble sans contexte de données sémantiques, qui représente toutes les interprétations valides possibles de ladite entrée audio ;
B. un script d'application vocale enregistré en mémoire avec le système RV et configuré pour assigner des tâches audit système RV, ledit script d'application définissant un contexte ;
C. un évaluateur de données sémantiques configuré pour recevoir ledit ensemble sans contexte de données sémantiques et ledit contexte défini par ledit script d'application et, en fonction de ces entrées reçues, pour produire un résultat linguistique correspondant à ladite entrée audio et constituant une interprétation spécifique dudit ensemble d'interprétations valides, et pour retourner ledit résultat linguistique audit script d'application ;
D. un ensemble d'interfaces orientées objet réutilisables qui sont locales dans le système RV, lesdites interfaces étant configurées pour interfacer ledit script d'application avec ledit système RV.

2. Système selon la revendication 1, dans lequel un ou plusieurs desdits scripts d'application est inclus dans une page Web.

3. Système selon la revendication 1, dans lequel une ou plusieurs desdites interfaces sont des objets exposés par des contrôles ActiveX.

4. Système selon la revendication 1, dans lequel ledit script d'application inclut un code de programmation écrit dans un langage choisi parmi le groupe de langages d'écriture de script comprenant
(1) Javascript ;
(2) Perlscript ; et
(3) VBscript.

5. Système selon la revendication 1, dans lequel ledit ensemble de données sémantiques est représenté comme une instance d'un arbre sémantique.

6. Système selon la revendication 1, dans lequel ledit ensemble de données sémantiques est représenté dans un objet sémantique.

7. Système selon la revendication 1, dans lequel ladite entrée audio est reçue depuis un appareil choisi parmi un groupe comprenant :
A. un téléphone ;
B. un téléphone cellulaire ;
C. un ordinateur personnel ;
D. un serveur d'application ; et
E. un récepteur audio.

8. Système selon la revendication 1, dans lequel ladite entrée audio est reçue au moyen d'un réseau composé d'un ou de plusieurs réseaux filaires ou sans fil parmi un groupe comprenant :
A. un réseau téléphonique ;
B. un réseau téléphonique cellulaire ;
C. un réseau local ;
D. un réseau étendu ;
E. un réseau privé virtuel ;
F. Internet ; et
G. le Web.

9. Système selon la revendication 1, dans lequel ladite pluralité d'interprétations valides de ladite entrée audio inclut toutes les représentations valides de ladite entrée audio au sein dudit contexte.

10. Système selon la revendication 1, **caractérisé en ce que** l'application vocale est choisie parmi un groupe d'applications vocales interactives comprenant :
A. les applications de sondage de consommateurs ;
B. les applications d'accès au Web ;
C. les applications éducatives, incluant les applications d'éducation sanitaire et les applications d'éducation et d'examen par ordinateur ;
D. les applications de triage, incluant les applications de triage de patients et les applications de triage de consommateurs ;
E. les applications d'évaluation de risques sanitaires ;
F. les applications de surveillance, incluant les applications de surveillance de d'indications médicales et les applications de surveillance des préférences de consommateurs ;
G. les applications de mise en conformité, incluant les applications qui produisent des notifications au sujet d'activités liées à la mise en conformité, dont les notifications au sujet de la maintenance sanitaire et de produits ;
H. les applications pour résultats d'examens, incluant les applications qui fournissent l'un au moins parmi les résultats d'examens en laboratoire, les résultats d'examens standardisés, les résultats d'examens de produits de consommation et les résultats de maintenance ; et
I. les applications de liaison, incluant les applications qui lient deux ou davantage parmi les applications dans les sections A à H.

11. Système selon l'une des revendications 1 à 10, dans lequel :
A. le système de reconnaissance vocale (RV) est hébergé dans un premier ordinateur et est configuré pour recevoir l'entrée audio depuis un dispositif d'entrée et pour produire un ou plusieurs objets sémantiques représentant une pluralité d'interprétations valides de ladite entrée audio ;
B. la page Web est enregistrée sur ledit premier ordinateur depuis un deuxième ordinateur, ladite page Web incluant un script d'application, qui comprend un ensemble de fonctions d'application vocale et qui est configuré pour interagir avec ledit dispositif de capture au moyen dudit système RV, ladite application vocale étant configurée pour accomplir des sessions d'application vocale sans accéder audit deuxième ordinateur ;
C. l'ensemble d'interfaces orientées objet réutilisables est local dans le premier ordinateur, lesdites interfaces comprenant :
(1) un ou plusieurs objets d'interface configurés pour faciliter l'accès à des services standard dudit premier ordinateur par ledit script d'application ;
(2) une interface sémantique configurée pour faciliter l'accès audit système RV, et le contrôle dudit système RV, par ledit script d'application ; et
D. l'évaluateur d'objet sémantique est configuré pour produire, à partir desdits objets sémantiques et en fonction dudit contexte, une seule interprétation de ladite entrée audio et pour retourner ladite seule interprétation audit script d'application.

12. Système selon la revendication 11, dans lequel l'application vocale est choisie parmi un groupe d'applications vocales interactives comprenant :
A. les applications de sondage de consommateurs ;
B. les applications d'accès au Web ;
C. les applications éducatives, incluant les applications d'éducation sanitaire et les applications d'éducation et d'examen par ordinateur ;
D. les applications de triage, incluant les applications de triage de patients et les applications de triage de consommateurs ;
E. les applications d'évaluation de risques sanitaires ;
F. les applications de surveillance, incluant les applications de surveillance de d'indications médicales et les applications de surveillance des préférences de consommateurs ;
G. les applications de mise en conformité, incluant les applications qui produisent des notifications au sujet d'activités liées à la mise en conformité, dont les notifications au sujet de la maintenance sanitaire et de produits ;
H. les applications pour résultats d'examens, incluant les applications qui fournissent l'un au moins parmi les résultats d'examens en laboratoire, les résultats d'examens standardisés, les résultats d'examens de produits de consommation et les résultats de maintenance ; et
I. les applications de liaison, incluant les applications qui lient deux ou davantage parmi les applications dans les sections A à H.

13. Système selon la revendication 11, dans lequel ledit ensemble d'interfaces orientées objet réutilisables et ledit évaluateur d'objet sémantique sont des objets exposés par des contrôles ActiveX.

14. Script d'application vocale pour une page Web, le script étant configuré pour interagir avec un système de reconnaissance vocale (RV) qui est hébergé dans un premier ordinateur et étant configuré pour recevoir une entrée audio et produire un ou plusieurs objets sémantiques qui représentent une pluralité d'interprétations valides de ladite entrée audio, ledit premier ordinateur comprenant également une pluralité d'objets d'interface et un évaluateur d'objet sémantique, qui est configuré pour produire une seule interprétation de ladite entrée audio à partir dudit un ou desdits plusieurs objets sémantiques en fonction d'un contexte, ledit script d'application vocale comprenant :
A. une définition de contexte ;
B. un lien avec ledit évaluateur d'objet sémantique ;
C. un lien avec ledit système RV, au moyen d'un objet d'interface sémantique parmi ladite pluralité d'objets d'interface ;
D. un ensemble de fonctions de contrôle comprenant :
(1) un gestionnaire de session, qui est configuré pour produire des sollicitations d'utilisateur et pour déterminer une action suivante en fonction de ladite seule interprétation ;
(2) un contrôleur de système RV, qui est configuré pour assigner des tâches audit système RV ;
(3) un gestionnaire de communication, qui est configuré pour superviser l'interaction avec ledit dispositif d'entrée au moyen dudit système RV,
dans lequel ledit script d'application vocale est enregistrable dans ledit premier ordinateur depuis un deuxième ordinateur et ladite application vocale est configurée pour conduire des sessions d'application vocale sans accéder audit deuxième ordinateur.

15. Script d'application selon la revendication 14, dans lequel lesdits objets d'interface sont des objets exposés par des contrôles ActiveX.

16. Script d'application selon la revendication 14, dans lequel ledit script d'application vocale est une application vocale choisie parmi un groupe d'applications vocales interactives comprenant :
A. les applications de sondage de consommateurs ;
B. les applications d'accès au Web ;
C. les applications éducatives, incluant les applications d'éducation sanitaire et les applications d'éducation et d'examen par ordinateur ;
D. les applications de triage, incluant les applications de triage de patients et les applications de triage de consommateurs ;
E. les applications d'évaluation de risques sanitaires ;
F. les applications de surveillance, incluant les applications de surveillance de d'indications médicales et les applications de surveillance des préférences de consommateurs ;
G. les applications de mise en conformité, incluant les applications qui produisent des notifications au sujet d'activités liées à la mise en conformité, dont les notifications au sujet de la maintenance sanitaire et de produits ;
H. les applications pour résultats d'examens, incluant les applications qui fournissent l'un au moins parmi les résultats d'examens en laboratoire, les résultats d'examens standardisés, les résultats d'examens de produits de consommation et les résultats de maintenance ; et
I. les applications de liaison, incluant les applications qui lient deux ou davantage parmi les applications dans les sections A à H.

17. Procédé pour configurer un système d'application vocale comprenant un système de reconnaissance vocale (RV), qui est hébergé dans un premier ordinateur et comprend des moyens pour recevoir une entrée audio, ledit procédé comprenant les étapes consistant à :
A. produire une page Web dans un deuxième ordinateur ;
B. définir un script d'application vocale selon la revendication 14;
C. intégrer ledit script d'application dans ladite page Web ;
D. enregistrer ladite page Web, incluant ledit script d'application, dans ledit premier ordinateur depuis ledit deuxième ordinateur; et
E. établir un ensemble d'interfaces standard entre ledit script d'application et ledit système RV.

18. Procédé d'opération d'un système d'application vocale comprenant un procédé selon la revendication 17, incluant les étapes consistant à :
A. recevoir ladite entrée audio par ledit système RV ;
B. enregistrer la page Web incluant le script d'application dans ledit premier ordinateur ;
C. établir un ensemble d'interfaces standard entre ledit système RV et ledit script d'application, dont l'établissement d'un évaluateur sémantique ;
D. en réponse à l'assignation de tâche par ledit script d'application, produire un ou plusieurs objets sémantiques représentant toutes les interprétations possibles de ladite entrée audio par ledit système RV ;
E. en réponse à la réception d'un contexte défini par ledit script d'application, déterminer une seule interprétation sémantique par ledit évaluateur sémantique à partir dudit un ou desdits plusieurs objets sémantiques ; et
F. déterminer une action suivante par ledit script d'application en fonction de ladite seule interprétation sémantique.
